# EUROPEAN PATENT APPLICATION

(11) **EP 4 803 977 A1**
(43) Date of publication of application: **09.09.2026**
(21) Application number: 26161577.7
(22) Date of filing: 02.03.2026
(51) Int. Cl.: G06F 1/28, G06F 1/30, H02M 1/36, H02M 3/158, G06F 1/3296

(54) **SYSTEMS AND METHODS FOR IN-RUSH CURRENT REGULATION USING CLOSED-LOOP CONTROL**

(30) Priority: 07.03.2025 US 202519073653
(71) Applicant: Avago Technologies International Sales Pte. Limited, Singapore 768923 (SG)
(72) Inventor: Li, Shengyuan, Irvine, CA, 92602 (US); Wang, Leon Samuel, Irvine, CA, 92602 (US); Moazzami, Kaveh, Aliso Viejo, CA, 92656 (US); Chandrasekhar, Vinay, Irvine, CA, 92602 (US); Jiang, Xicheng, Irvine, CA, 92612 (US)
(74) Representative: Grünecker Patent- und Rechtsanwälte PartG mbB

(57) **Abstract**

The subject technology is directed to electronic circuits. In an embodiment, the subject technology provides an apparatus that includes an input terminal configured to receive an input clock signal. The apparatus further includes a delay controller coupled to the input terminal and configured to generate a first clock signal by providing a first delay to the input clock signal. An accumulator is coupled to the delay controller and configured to generate a first signal and adjust the first delay based on a second signal, the second signal being associated with an in-rush current threshold. A first circuit is coupled to the input terminal and configured to generate an output clock signal based at least on the first clock signal. By implementing a closed-loop control mechanism, the apparatus adjusts the duty cycle based on real-time current feedback, ensuring stable power-up operation without excessive delays. There are other embodiments as well.

## Description

### FIELD OF INVENTION

The subject technology is directed to electronic circuits.

### BACKGROUND OF THE INVENTION

In modern electronic systems, switching-mode power supplies (SMPS) are widely used to provide efficient and stable power delivery across various applications, such as battery-powered wearable devices, health monitoring systems, and sensor-based platforms. Many of these devices operate with low duty cycles, where the system remains in an inactive or low-power state for a significant portion of time and only activates intermittently to perform sensing or processing tasks. For example, health-sensing wearable devices that process low-frequency biosignals often operate at 1-5% active duty cycles, with the remaining 95-99% of the time spent in a power-down state to conserve battery life. As a result, these devices experience frequent power cycling, requiring an efficient power regulation mechanism that enables fast startup without exceeding in-rush current limits.

In battery-powered systems, power is distributed through a power distribution network (PDN) to various functional blocks, including power management units (PMU), radio frequency (RF) modules, processors, and/or memory components. When a high-power module or an SMPS transitions from a power-down state to an active mode, an excessive in-rush current surge can occur, which may lead to voltage sag or dip in the PDN. If the voltage drop is severe, it can trigger a power-on-reset (POR), forcing the system to restart and potentially disrupting normal operation. To mitigate this risk, many SMPS applications implement in-rush current limiting mechanisms during startup. However, these approaches must balance in-rush current regulation with fast system wake-up times to ensure an optimal user experience.

Various approaches for regulating in-rush current have been explored, but they have proven to be insufficient. It is important to recognize the need for new and improved systems and methods.

### BRIEF DESCRIPTION OF THE DRAWINGS

A further understanding of the nature and advantages of particular embodiments may be realized by reference to the remaining portions of the specification and the drawings, in which like reference numerals are used to refer to similar components. In some instances, a sub-label is associated with a reference numeral to denote one of multiple similar components. When reference is made to a reference numeral without specification to an existing sub-label, it is intended to refer to all such multiple similar components.
Figure 1 is a circuit diagram illustrating a system for in-rush current regulation in a switching-mode power supply (SMPS), in accordance with various embodiments of the subject technology.
Figure 2 is a circuit diagram illustrating a system for in-rush current regulation using a voltage-controlled delay mechanism, in accordance with various embodiments of the subject technology.
Figure 3 is a circuit diagram illustrating a system for in-rush current regulation using a digitally controlled delay mechanism, in accordance with various embodiments of the subject technology.

### DETAILED DESCRIPTION OF THE INVENTION

The subject technology is directed to electronic circuits. In an embodiment, the subject technology provides an apparatus that includes an input terminal configured to receive an input clock signal. The apparatus further includes a delay controller coupled to the input terminal and configured to generate a first clock signal by providing a first delay to the input clock signal based on a first signal. An accumulator is coupled to the delay controller and configured to generate the first signal and adjust the first delay based on a second signal, the second signal being associated with an in-rush current threshold. A first circuit is coupled to the input terminal and the delay controller and is configured to generate an output clock signal based at least on the first clock signal. By implementing a closed-loop control mechanism, the apparatus adjusts the duty cycle based on real-time current feedback, enabling precise in-rush current regulation and ensuring stable power-up operation without excessive delays. There are other embodiments as well.

As previously noted, managing in-rush current during startup presents a significant challenge in switching-mode power supplies (SMPS), such as in battery-powered wearable health-sensing devices. An SMPS is a type of power regulator that converts electrical energy from a power source to the required voltage level using high-frequency switching techniques. Unlike linear regulators, which dissipate excess energy as heat, SMPS designs achieve high efficiency by rapidly switching power transistors on and off, transferring energy through inductors, capacitors, and/or transformers. However, SMPS startup tends to produce a high surge current-known as the in-rush current-which must be controlled within allowable limits. For example, the term "in-rush current" may refer to the initial surge of current that occurs when a power supply is first connected to a load or when a device is powered on. If not properly controlled, excessive in-rush current can cause voltage sag or dips in the power distribution network, potentially triggering a power-on reset (POR) and leading to system instability or unintended shutdowns.

One of the challenges of startup in SMPS applications-such as in boost converters-is managing in-rush current while minimizing startup time. In various applications, the startup process may involve three stages. In the first stage (e.g., a buck stage), the output voltage is lower than the input voltage, and a direct conduction path exists between the input and output, allowing current to flow with minimal switching activity. In the second stage (e.g., a boost stage), the output voltage must be increased above the input voltage, requiring active switching to regulate power transfer. This stage presents a challenge for startup speed, as the system must carefully balance the need for rapid voltage ramp-up with the risk of excessive in-rush current. In the third stage (e.g., a closed-loop regulation stage), the output voltage reaches the target setpoint, and the system transitions to steady-state operation with feedback-controlled regulation. Because the boost stage requires switching activity to increase the output voltage, it becomes the bottleneck in achieving fast startup while keeping in-rush current within a predefined limit.

Some approaches rely on open-loop duty cycle control to regulate the in-rush current by gradually increasing the duty cycle to keep the in-rush current under a predefined limit. In an open-loop implementation, the duty cycle follows a fixed ramp-up sequence to prevent sudden surges in current during startup. However, open-loop control lacks real-time adaptability and does not respond to actual in-rush current conditions. Because the in-rush current depends on various factors such as input voltage, load conditions, and temperature, a fixed duty-cycle ramp cannot fully utilize the available in-rush current limit. As a result, open-loop regulation often leads to unnecessarily long startup times, as it must be conservative to avoid exceeding current constraints. Additionally, as in-rush current naturally increases over time, an uncontrolled ramp-up can lead to conditions where the current threshold is exceeded before reaching the target voltage, resulting in voltage sag or system instability. These limitations become even more pronounced when operating at lower battery voltages (e.g., 2.5V or 2.3V), where existing techniques struggle to meet both in-rush current constraints and required startup times.

In various implementations, the subject technology provides systems and methods for regulating in-rush current using a closed-loop duty-cycle control mechanism. The disclosed system adjusts the duty cycle based on real-time in-rush current measurements. By continuously monitoring current levels and modulating power delivery accordingly, the system ensures that the startup is both fast and stable while keeping in-rush current within a predefined threshold. The closed-loop approach maximizes the use of available in-rush current, allowing for faster startup times without exceeding safe operating limits. Additionally, the adaptive control mechanism enables reliable operation at lower battery voltages (e.g., 2.5V or lower), enhancing power efficiency in battery-operated systems such as wearable health-sensing devices. In some embodiments, the disclosed systems and methods may also be implemented using a preprogrammed duty-cycle control scheme. For instance, the duty cycle may follow a predetermined transient waveform instead of being continuously modified based on closed-loop feedback. This approach provides an alternative in-rush current regulation method where read-time feedback is not required, allowing for deterministic control over startup timing while constraining in-rush current.

The following description is presented to enable one of ordinary skill in the art to make and use the invention and to incorporate it in the context of particular applications. Various modifications, as well as a variety of uses in different applications, will be readily apparent to those skilled in the art, and the general principles defined herein may be applied to a wide range of embodiments. Thus, the subject technology is not intended to be limited to the embodiments presented but is to be accorded the widest scope consistent with the principles and novel features disclosed herein.

In the following detailed description, numerous specific details are set forth in order to provide a more thorough understanding of the subject technology. However, it will be apparent to one skilled in the art that the subject technology may be practiced without necessarily being limited to these specific details. In other instances, well-known structures and devices are shown in block diagram form, rather than in detail, in order to avoid obscuring the subject technology.

The reader's attention is directed to all papers and documents which are filed concurrently with this specification and which are open to public inspection with this specification, and the contents of all such papers and documents are incorporated herein by reference. All the features disclosed in this specification, (including any accompanying claims, abstract, and drawings) may be replaced by alternative features serving the same, equivalent or similar purpose, unless expressly stated otherwise. Thus, unless expressly stated otherwise, each feature disclosed is one example only of a generic series of equivalent or similar features.

Furthermore, any element in a claim that does not explicitly state "means for" performing a specified function, or "step for" performing a specific function, is not to be interpreted as a "means" or "step" clause as specified in 35 U.S.C. Section 112, Paragraph 6. In particular, the use of "step of" or "act of" in the Claims herein is not intended to invoke the provisions of 35 U.S.C. 112, Paragraph 6.

When an element is referred to herein as being "connected" or "coupled" to another element, it is to be understood that the elements can be directly connected to the other element, or have intervening elements present between the elements. In contrast, when an element is referred to as being "directly connected" or "directly coupled" to another element, it should be understood that no intervening elements are present in the "direct" connection between the elements. However, the existence of a direct connection does not exclude other connections, in which intervening elements may be present.

Moreover, the terms left, right, front, back, top, bottom, forward, reverse, clockwise and counterclockwise are used for purposes of explanation only and are not limited to any fixed direction or orientation. Rather, they are used merely to indicate relative locations and/or directions between various parts of an object and/or components.

Furthermore, the methods and processes described herein may be described in a particular order for ease of description. However, it should be understood that, unless the context dictates otherwise, intervening processes may take place before and/or after any portion of the described process, and further various procedures may be reordered, added, and/or omitted in accordance with various embodiments.

Unless otherwise indicated, all numbers used herein to express quantities, dimensions, and so forth should be understood as being modified in all instances by the term "about." In this application, the use of the singular includes the plural unless specifically stated otherwise, and use of the terms "and" and "or" means "and/or" unless otherwise indicated. Moreover, the use of the terms "including" and "having," as well as other forms, such as "includes," "included," "has," "have," and "had," should be considered non-exclusive. Also, terms such as "element" or "component" encompass both elements and components comprising one unit and elements and components that comprise more than one unit, unless specifically stated otherwise.

As used herein, the phrase "at least one of" preceding a series of items, with the term "and" or "or" to separate any of the items, modifies the list as a whole, rather than each member of the list (i.e., each item). The phrase "at least one of" does not require the selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C," or alternatively, "at least one of A, at least one of B, and at least one of C," it is expressly described as such.

One general aspect includes an apparatus, which comprises an input terminal configured to receive an input clock signal. The apparatus further comprises a delay controller coupled to the input terminal, the delay controller being configured to generate a first clock signal by providing a first delay to the input clock signal based on a first signal. The apparatus further comprises an accumulator coupled to the delay controller, the accumulator being configured to generate the first signal and adjust the first delay based on a second signal, the second signal being associated with an in-rush current threshold. The apparatus further comprises a first circuit coupled to the input terminal and the delay controller, the first circuit being configured to generate an output clock signal based at least on the first clock signal.

Implementations may include one or more of the following features. The output clock signal is characterized by a first duty cycle, the first duty cycle is associated with the first delay. The first signal comprises an analog signal. The first signal comprises a digital signal. The first circuit comprises a logic gate configured to generate the output clock signal based at least on the input clock signal and the first clock signal. The apparatus further comprises a comparator coupled to the accumulator, the comparator being configured to generate the second signal by comparing a first in-rush current to the in-rush current threshold. The first in-rush current is measured by a current sensing circuit coupled to a power stage. The accumulator is configured to decrease the first delay in response to the second signal indicating that the first in-rush current exceeds the in-rush current threshold. The accumulator is configured to increase the first delay in response to the second signal indicating that the first in-rush current is below the in-rush current threshold.

According to another embodiment, the subject technology provides an apparatus that comprises an input terminal configured to receive an input clock signal. The apparatus further comprises a delay controller coupled to the input terminal, the delay controller being configured to generate a first clock signal by providing a first delay to the input clock signal based on a first signal. The apparatus further comprises an accumulator coupled to the delay controller, the accumulator being configured to generate the first signal and adjust the first delay based on a second signal. The apparatus further comprises a comparator coupled to the accumulator, the comparator being configured to generate the second signal by comparing a first in-rush current to an in-rush current threshold. The apparatus further comprises a first circuit coupled to the delay controller, the first circuit being configured to generate an output clock signal based at least on the first clock signal.

Implementations may include one or more of the following features. The output clock signal is characterized by a first duty cycle, the first duty cycle is associated with the first delay. The first signal comprises an analog signal. The first signal comprises a digital signal. The first circuit comprises a logic gate configured to generate the output clock signal based at least on the input clock signal and the first clock signal. The logic gate comprises an XOR gate or an AND gate.

According to yet another embodiment, the subject technology provides an apparatus, which comprises an input terminal configured to receive an input clock signal. The apparatus further comprises a delay controller coupled to the input terminal, the delay controller being configured to generate a first clock signal by providing a first delay to the input clock signal. The apparatus further comprises an accumulator coupled to the delay controller, the accumulator being configured to adjust the first delay based on a first signal, the first signal being associated with an in-rush current threshold. The apparatus further comprises a first circuit coupled to the input terminal and the delay controller, the first circuit being configured to generate an output clock signal based at least on the first clock signal. In various embodiments, the apparatus further comprises a comparator coupled to the accumulator, the comparator being configured to generate the first signal by comparing a first in-rush current to the in-rush current threshold. The accumulator is configured to decrease the first delay in response to the first signal indicating that the first in-rush current exceeds the in-rush current threshold. The accumulator is configured to increase the first delay in response to the first signal indicating that the first in-rush current is below the in-rush current threshold.

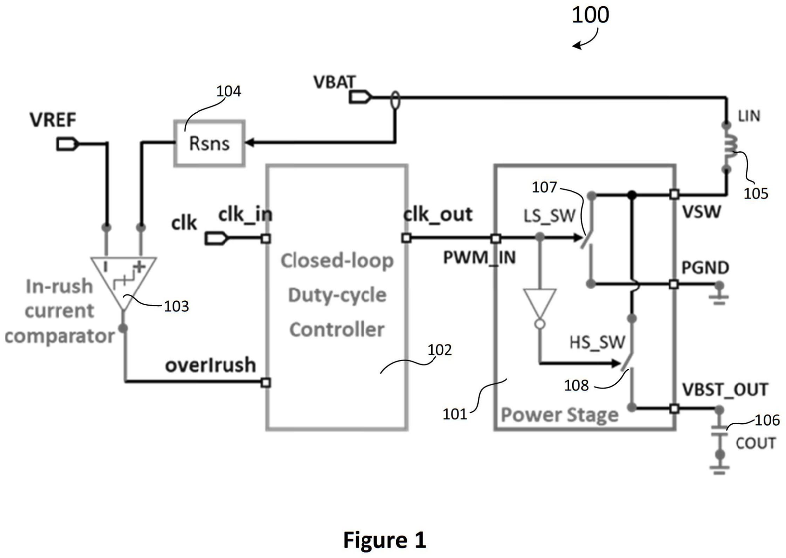

Figure 1 is a circuit diagram illustrating a system 100 for in-rush current regulation in a switching-mode power supply (SMPS), in accordance with various embodiments of the subject technology. This diagram merely provides an example, which should not unduly limit the scope of the claims. One of ordinary skill in the art would recognize many variations, alternatives, and modifications. For example, the term "switching-mode power supply" may refer to a power regulation system that converts electrical energy between voltage levels using high-frequency switching techniques. Examples of SMPS may include, without limitation, buck converters, boost converters, buck-boost converters, isolated power converters, and/or the like.

System 100 may be implemented in various applications, such as battery-powered devices, wearable electronics, portable computing systems, and other power management devices that require in-rush current control. Depending on the application, system 100 may incorporate various features such as closed-loop duty-cycle control, real-time current sensing, adaptive duty-cycle modulation, and/or other techniques to optimize power delivery during startup. As an example, system 100 may be implemented in a boost converter, which operates in three startup phases, including a buck stage, a boost stage, and a closed-loop regulation stage. During the boost stage-where the output voltage must be increased above the input voltage-system 100 may adjust the duty cycle of the switching elements to regulate in-rush current, ensuring that the power transfer is controlled and preventing excessive current surges.

As shown, system 100 may include at least one of power stage 101, duty-cycle controller 102, comparator 103, converter 104, and/or the like. These components work together to adjust the duty cycle of the SMPS switching elements based on real-time feedback, preventing excessive in-rush current while optimizing startup speed.

In various implementations, power stage 101 is configured to regulate power transfer from an input node (e.g., VBAT) to an output node (e.g., VBST_OUT). For example, the term "power stage" may refer to a circuit that converts electrical energy from an input voltage to a regulated output voltage. Depending on the implementation, a power stage may be implemented using switching elements, inductive components, capacitive storage elements, and/or the like. In some examples, power stage 101 includes low-side switch 107 (e.g., LS_SW) and high-side switch 108 (e.g., HS_SW), which may function as controlled transistors to regulate energy transfer. Low-side switch 107 may be coupled between input inductor 105 (e.g., LIN) and ground (e.g., PGND). High-side switch 108 may be coupled between input inductor 105 and the output node (e.g., VBST_OUT). These switches may operate in a complementary switching sequence, enabling energy transfer in a controlled manner.

As an example, when low-side switch 107 is activated (e.g., turned ON), current flows through input inductor 105, storing energy in the magnetic field. During this phase, high-side switch 108 remains OFF, isolating the output node. When low-side switch 107 is deactivated (e.g., turned OFF) and high-side switch 108 is activated (e.g., turned ON), the stored energy in input inductor 105 is released, and the current is transferred to output capacitor 106 (e.g., COUT), which smooths the voltage ripple and maintains a stable output voltage at the output node (e.g., VBST_OUT). By modulating the switching activity of low-side switch 107 and high-side switch 108, power stage 101 controls the boost conversion process while maintaining compliance with in-rush current constraints.

In various embodiments, power stage 101 receives a pulse-width modulation (PWM) signal (e.g., PWM_IN) from duty-cycle controller 102, which dictates the timing and duration of switch transitions. For example, duty-cycle controller 102 is configured to adjust the duty cycle of the PWM_IN signal based on real-time feedback, enabling adaptive control of power stage 101. For instance, the term "duty cycle" may refer to the ratio of the time a signal or system is in its "ON" state to the total time of one complete cycle.

In some implementations, duty-cycle controller 102 operates using a closed-loop control mechanism to regulate the duty cycle in real time. For example, the term "closed-loop control" may refer to a control mechanism where the output of a process (e.g., in-rush current or output voltage) is continuously monitored and fed back to adjust system behavior in real time. Unlike open-loop control, which operates based on pre-defined settings without real-time correction, closed-loop systems modify control signals based on measured system conditions to adapt to variations in system conditions. In some examples, duty-cycle controller 102 receives an input clock signal (e.g., clk_in) and generates an output clock signal (e.g., clk_out) based on the input clock signal. For instance, the output clock signal may be used to derive PWM_IN for power stage 101. The duty cycle of clk_out signal may determine the switching duration of low-side switch 107 and high-side switch 108 in power stage 101, regulating energy transfer from the input node (e.g., VBAT) to the output node (e.g., VBST_OUT).

According to some embodiments, duty-cycle controller 102 receives feedback (e.g., overIrush) from comparator 103, which may be configured to monitor and compare real-time in-rush current against a predefined in-rush current threshold (e.g., VREF). For example, the term "comparator" may refer to an electronic device that compares two input voltages or signals and generates an output signal based on the comparison. Examples of comparators may include, without limitation, operational amplifiers, differential comparators, CMOS comparators, and/or the like.

In some examples, comparator 103 may receive a real-time in-rush current measurement, which may be first sensed and converted into a voltage signal via converter 104. For example, the term "converter" may refer to an electronic circuit that transforms a signal from one form to another. Examples of converters may include, without limitation, current-to-voltage converters, voltage-to-current converters, and/or the like. For example, converter 104 may include a current-to-voltage converter with a gain factor of Rsns, meaning that the output voltage is proportional to the measured in-rush current.

In some embodiments, the converted voltage signal may then be compared to an in-rush current threshold (e.g., VREF). For instance, the term "in-rush current threshold" may refer to a predefined upper limit on the amount of current that is allowed to flow into a system during startup. Depending on the application, the in-rush current threshold may be determined based on system constraints, power supply characteristics, load requirements, and/or transient response considerations. In some cases, VREF may be set to a value close to but slightly less than the maximum allowable in-rush current limit multiplied by Rsns. This ensures that the system operates near its maximum safe startup current while maintaining a safety margin to prevent overcurrent conditions.

In operation, comparator 103 continuously monitors the real-time in-rush current by comparing a converted voltage signal-proportional to the measured in-rush current-to a predefined threshold (e.g., VREF) and generates an output signal (e.g., overIrush) based on the comparison. For example, when the in-rush current remains below the threshold, overIrush remains low, enabling duty-cycle controller 102 to maintain or increase the duty cycle of clk_out. Conversely, when the in-rush current exceeds the threshold, overIrush transitions to a high state, signaling duty-cycle controller 102 to reduce the duty cycle. For example, duty-cycle controller 102 may receive a 50% duty cycle input clock signal (e.g., clk_in) and adjust the duty cycle based on the overIrush signal generated by comparator 103. The adjusted clk_out signal may be sent to power stage 101 via the PWM_IN signal, where it dictates the switching behavior of switching transistors to regulate energy transfer from VBAT to VBST_OUT.

By continuously monitoring the in-rush current and adjusting the duty cycle of clk_out in real time, system 100 implements a closed-loop control mechanism that optimizes startup speed while maintaining current within safe limits. Depending on the implementation, duty-cycle controller 102 may be implemented using digital control logic, analog control loops, or a combination of both.

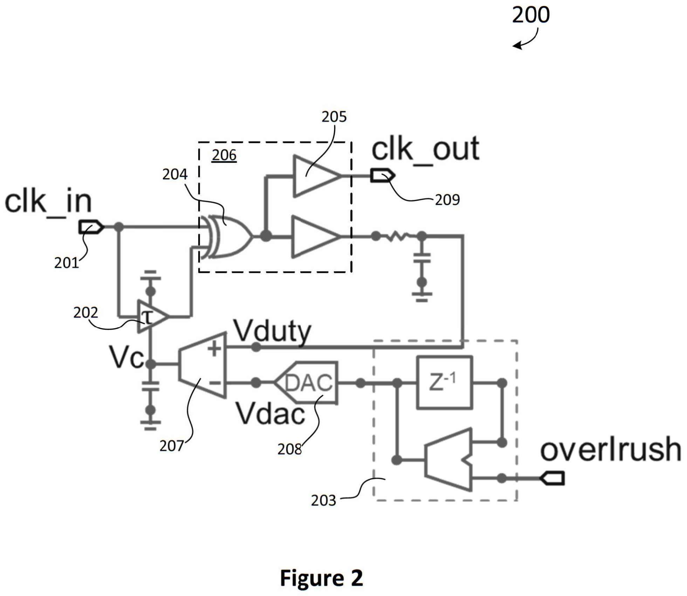

Figure 2 is a circuit diagram illustrating a system 200 for in-rush current regulation using a voltage-controlled delay mechanism, in accordance with various embodiments of the subject technology. This diagram merely provides an example, which should not unduly limit the scope of the claims. One of ordinary skill in the art would recognize many variations, alternatives, and modifications.

In various implementations, system 200 may be part of a larger power regulation system (e.g., system 100 of Figure 1) and may be configured to adjust the duty cycle of a PWM signal to regulate in-rush current during startup. For instance, system 200 may function as a duty-cycle controller-similar to duty-cycle controller 102 of Figure 1-and may operate in conjunction with a power stage to regulate energy transfer while ensuring compliance with in-rush current constraints. In some embodiments, system 200 may include at least one of input terminal 201, delay controller 202, accumulator 203, first circuit 206, output terminal 209, and/or the like.

In various examples, input terminal 201 may be configured to receive an input clock signal (e.g., clk_in), which serves as the reference timing source for the duty-cycle regulation process. For instance, the term "input terminal" may refer to a physical or electrical interface within an electronic circuit that is configured to receive an electrical signal or power from an external source. Input terminals may include, without limitation, electrical connectors, pins, pads, ports, sockets, or any other physical or virtual interface capable of accepting input. The input terminal may be implemented as a standalone component or integrated into a larger system or circuit. Depending on the implementation, input terminal 201 may include signal conditioning circuitry, protection mechanisms, or multiplexing capabilities to handle various types of inputs.

The term "clock signal" may refer to any periodic signal used for timing or synchronization purposes within a system or circuit. In some implementations, the input clock signal may be adjustable, programmable, or derived from other timing sources. For instance, the input clock may be sourced from an external oscillator, phase-locked loop (PLL), or another system clock generator. In some cases, the input clock signal (e.g., clk_in) may have a fixed duty cycle (e.g., 50%) and may be used as a timing reference for regulating switching events in a power management system (e.g., system 100 of Figure 1).

In some embodiments, delay controller 202 may be coupled to input terminal 201 and configured to generate a first clock signal by providing a first delay to the input clock signal. For example, the term "delay" may refer to a controlled time shift applied to a signal. The term "delay controller" may refer to an electronic circuit or device that regulates the amount of delay applied to an input signal. Examples of delay controllers may include, without limitation, voltage-controlled delay lines (VCDLs), digitally controlled delay elements, propagation delay circuits, phase-shifting networks, buffer-based timing adjustments, and/or the like. Depending on the implementation, the first delay introduced by delay controller 202 may be fixed, adjustable, programmable, or adaptively controlled based on real-time feedback.

In some examples, delay controller 202 may be implemented using a VCDL, where the first delay is adjusted based on a first signal (e.g., control voltage Vc). The first clock signal generated by delay controller 202 may be a delayed version of the input clock signal (e.g., clk_in), where the amount of delay is continuously tuned according to the value of Vc. By varying the control voltage Vc, system 200 effectively modifies the phase shift of the input clock signal (e.g., clk_in), thereby adjusting the duty cycle of the output clock signal (e.g., clk_out).

In various implementations, accumulator 203 may be coupled to delay controller 202 and configured to generate the first signal (e.g., control voltage Vc) and adjust the first delay applied to the input clock signal. For example, the term "accumulator" may refer to a circuit or device that iteratively adjusts a signal over time (e.g., based on an error signal or feedback mechanism). Examples of accumulators may include, without limitation, digital accumulators, charge pump circuits, integrators, and/or the like.

In some examples, accumulator 203 may operate based on a second signal (e.g., overIrush). For instance, the second signal may be generated by an in-rush current monitoring circuit (e.g., comparator 103 of Figure 1) and indicate whether the real-time in-rush current exceeds an in-rush current threshold. As an example, if the in-rush current remains below the threshold, overIrush remains low, allowing accumulator 203 to incrementally adjust Vc to reduce the first delay introduced by delay controller 202, thereby increasing the duty cycle of clk_out. Conversely, if the in-rush current exceeds the threshold, overIrush transitions to a high state, signaling accumulator 203 to increase the first delay, thereby reducing the duty cycle of clk_out to limit excessive current surges.

In certain configurations, accumulator 203 may operate in conjunction with digital-to-analog converter (DAC) 208. For example, the term "digital-to-analog converter" may refer to an electronic device or circuit that converts digital signals (e.g., binary code) into analog signals (e.g., continuous voltage or current). Examples of DACs may include, without limitation, binary-weighted DACs, R-2R Ladder DACs, sigma-delta DACs, PWM-based DACs, and/or the like. In some examples, DAC 208 may be configured to convert the digital output of accumulator 203 into an analog control voltage (e.g., Vdac), which serves as a reference for regulating the control voltage Vc.

In some embodiments, voltage regulator 207 may be coupled to DAC 208 and configured to regulate Vdac and generate a stable control voltage (e.g., Vc) that controls the first delay introduced by delay controller 202. For example, the term "voltage regulator" may refer to an electronic circuit that maintains a stable output voltage despite variations in input voltage, system load, or environmental conditions. Examples of voltage regulators may include, without limitation, low-dropout (LDO) regulators, operational amplifier-based voltage followers, charge pumps, and/or the like. In various examples, voltage regulator 207 may function as an error amplifier or buffer, ensuring that Vc remains stable and tracks the desired value. Once Vc settles, its average value (e.g., Vduty) is regulated to match Vdac, allowing the system to continuously fine-tune the delay. The regulated Vc is then applied to delay controller 202, which adjusts the duty cycle of clk_out by modulating the first delay introduced to clk_in.

In various implementations, system 200 further includes first circuit 206, which may be coupled to input terminal 201 and/or delay controller 202. For instance, first circuit 206 may be responsible for processing and conditioning the input clock signal (e.g., clk_in) and generating an output clock signal (e.g., clk_out) with a controlled duty cycle.

In some examples, first circuit 206 includes logic gate 204. For example, the term "logic gate" may refer to a circuit or device that performs a logical operation on one or more input signals to produce an output signal. Depending on the implementation, logic gate 204 may be configured as a combinational logic circuit (e.g., AND, OR, NOR, NAND) or as a programmable logic element that can adapt its operation based on system requirements. In some examples, logic gate 204 is configured to generate the output clock signal (e.g., clk_out) based at least on the input clock signal (e.g., clk_in) and the first clock signal (e.g., a delayed version of clk_in). For instance, logic gate 204 may be configured as an XOR gate, which outputs a high signal when its two inputs differ and a low signal when its two inputs are the same. By XOR-ing the input clock signal with the first clock signal, logic gate 204 generates a PWM output, where the duty cycle is associated with the first delay introduced by delay controller 202.

In some cases, first circuit 206 may further include buffer 205, which may be coupled to logic gate 204 and configured to condition and stabilize the output clock signal (e.g., clk out) before sending it to downstream components (e.g., power stage of Figure 1) at output terminal 209. The term "buffer" may refer to an electronic circuit that isolates, amplifies, or conditions a signal to ensure reliable transmission. Examples of buffers may include, without limitation, voltage buffers, current buffers, clock distribution buffers, and/or the like.

It is to be appreciated that system 200 provides an analog closed-loop duty-cycle regulation mechanism using a VCDL to adjust the duty cycle of the output clock signal in response to real-time in-rush current conditions. By leveraging an analog control approach, system 200 continuously fine-tunes the delay introduced to the input clock signal, ensuring that the power regulation system (e.g., system 100 of Figure 1) operates within predefined in-rush current limits while achieving fast startup performance.

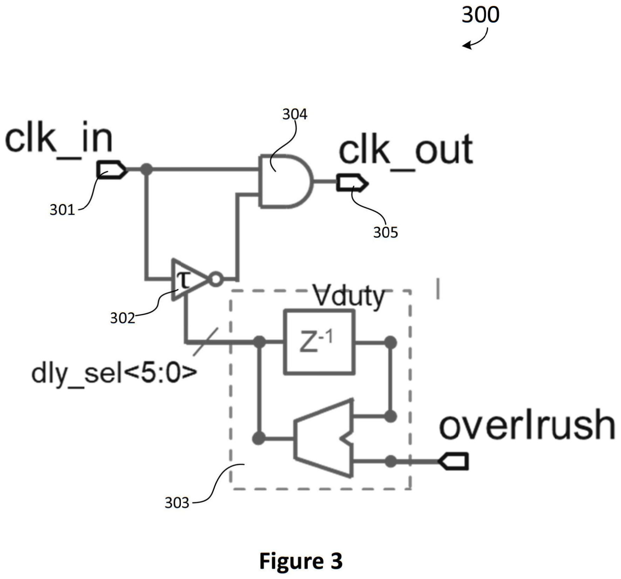

Figure 3 is a circuit diagram illustrating a system 300 for in-rush current regulation using a digitally controlled delay mechanism, in accordance with various embodiments of the subject technology. This diagram merely provides an example, which should not unduly limit the scope of the claims. One of ordinary skill in the art would recognize many variations, alternatives, and modifications.

In various implementations, system 300 may be part of a larger power regulation system (e.g., system 100 of Figure 1) and may be configured to regulate the duty cycle of a clock signal (e.g., clk_out) based on in-rush current conditions. For instance, system 300 may function as a duty-cycle controller-similar to duty-cycle controller 102 of Figure 1-and may operate in conjunction with a power stage to regulate energy transfer while ensuring compliance with in-rush current constraints. In some cases, system 300 may utilize a digitally controlled delay mechanism to regulate the in-rush current during startup, where the delay is modulated based on digital selection inputs. As shown, system 300 may include at least one of input terminal 301, delay controller 302, accumulator 303, logic gate 304, output terminal 305, and/or the like.

In some embodiments, input terminal 301 may be configured to receive an input clock signal (e.g., clk_in), which serves as the reference timing signal for duty-cycle regulation. The input clock signal may have a fixed duty cycle (e.g., 50%) and may be used as a reference for adjusting the output clock signal (e.g., clk_out).

In some embodiments, delay controller 302 may be coupled to input terminal 301 and configured to generate a first clock signal by introducing a first delay to the input clock signal. For instance, delay controller 302 may operate based on a digital selection signal (e.g., dly_sel<5:0>), which determines the first delay applied to the input clock signal. In other words, delay controller 302 utilizes a digitally controlled delay mechanism, where the digital selection signal (e.g., dly_sel<5:0>) selects a predefined delay step from a set of discrete delay values. The selected delay value is then applied to the input clock signal (e.g., clk_in), generating a delayed clock signal (e.g., the first clock signal) with a phase shift relative to the input clock signal. By adjusting the delay based on dly_sel<5:0>, system 300 can modulate the duty cycle of the output clock signal (e.g., clk_out) in a controlled manner.

In various implementations, accumulator 303 may be coupled to delay controller 302 and configured to adjust the first delay based on real-time in-rush current conditions. For example, accumulator 303 may operate based on a second signal (e.g., overIrush), which may be generated by an in-rush current monitoring circuit (e.g., comparator 103 of Figure 1). If the in-rush current remains below an in-rush current threshold, overIrush remains low, allowing accumulator 303 to gradually increase the first delay introduced by delay controller 302, thereby increasing the duty cycle of clk_out. Conversely, if the in-rush current exceeds the in-rush current threshold, overIrush transitions to a high state, signaling accumulator 303 to decrease the delay, thereby reducing the duty cycle to limit excessive current surges.

According to some embodiments, logic gate 304 may be coupled to input terminal 301 and/or delay controller. For example, logic gate 304 may be configured to generate the output clock signal (e.g., clk_out) based at least on the input clock signal and the first clock signal (e.g., a delayed version of clk_in). In some implementations, logic gate 304 may be configured as an AND gate, which generates the output clock signal by logically combining the input clock signal and the first clock signal. When both signals are high, the output remains high, and when either signal is low, the output remains low. By adjusting the first delay applied to clk_in, system 300 effectively controls the pulse width of clk_out, thereby modulating the duty cycle in response to real-time in-rush current conditions. In some cases, output terminal 305 may be coupled to logic gate 304 and configured to deliver the output clock signal (e.g., clk_out) to downstream circuitry (e.g., power stage 101 of Figure 1).

It is to be appreciated that system 300 provides a digital closed-loop duty-cycle regulation mechanism that adjusts the delay of the input clock signal based on real-time in-rush current conditions. System 300 leverages digital delay selection inputs (e.g., dly_sel<5:0>) to control the duty cycle in discrete steps. This digital implementation allows for predictable and configurable duty-cycle adjustments, making system 300 well-suited for applications requiring precise, stepwise control over in-rush current regulation while maintaining compatibility with digitally controlled power management systems.

While the above is a full description of the specific embodiments, various modifications, alternative constructions and equivalents may be used. Therefore, the above description and illustrations should not be taken as limiting the scope of the subject technology which is defined by the appended claims.

The following are further embodiments of the invention:
1. An apparatus comprising:
   an input terminal configured to receive an input clock signal;
   a delay controller coupled to the input terminal, the delay controller being configured to generate a first clock signal by providing a first delay to the input clock signal based on a first signal;
   an accumulator coupled to the delay controller, the accumulator being configured to generate the first signal and adjust the first delay based on a second signal, the second signal being associated with an in-rush current threshold; and
   a first circuit coupled to the input terminal and the delay controller, the first circuit being configured to generate an output clock signal based at least on the first clock signal.
2. The apparatus of embodiment 1, wherein the output clock signal is characterized by a first duty cycle, the first duty cycle is associated with the first delay.
3. The apparatus of embodiment 1, wherein the first signal comprises an analog signal.
4. The apparatus of embodiment 1, wherein the first signal comprises a digital signal.
5. The apparatus of embodiment 1, wherein the first circuit comprises a logic gate configured to generate the output clock signal based at least on the input clock signal and the first clock signal.
6. The apparatus of embodiment 1, further comprising a comparator coupled to the accumulator, the comparator being configured to generate the second signal by comparing a first in-rush current to the in-rush current threshold.
7. The apparatus of embodiment 6, wherein the first in-rush current is measured by a current sensing circuit coupled to a power stage.
8. The apparatus of embodiment 6, wherein the accumulator is configured to decrease the first delay in response to the second signal indicating that the first in-rush current exceeds the in-rush current threshold.
9. The apparatus of embodiment 6, wherein the accumulator is configured to increase the first delay in response to the second signal indicating that the first in-rush current is below the in-rush current threshold.
10. An apparatus comprising:
   an input terminal configured to receive an input clock signal;
   a delay controller coupled to the input terminal, the delay controller being configured to generate a first clock signal by providing a first delay to the input clock signal based on a first signal;
   an accumulator coupled to the delay controller, the accumulator being configured to generate the first signal and adjust the first delay based on a second signal;
   a comparator coupled to the accumulator, the comparator being configured to generate the second signal by comparing a first in-rush current to an in-rush current threshold; and
   a first circuit coupled to the delay controller, the first circuit being configured to generate an output clock signal based at least on the first clock signal.
11. The apparatus of embodiment 10, wherein the output clock signal is characterized by a first duty cycle, the first duty cycle is associated with the first delay.
12. The apparatus of embodiment 10, wherein the first signal comprises an analog signal.
13. The apparatus of embodiment 10, wherein the first signal comprises a digital signal.
14. The apparatus of embodiment 10, wherein the first circuit comprises a logic gate configured to generate the output clock signal based at least on the input clock signal and the first clock signal.
15. The apparatus of embodiment 14, wherein the logic gate comprises an XOR gate or an AND gate.
16. An apparatus comprising:
   an input terminal configured to receive an input clock signal;
   a delay controller coupled to the input terminal, the delay controller being configured to generate a first clock signal by providing a first delay to the input clock signal;
   an accumulator coupled to the delay controller, the accumulator being configured to adjust the first delay based on a first signal, the first signal being associated with an in-rush current threshold; and
   a first circuit coupled to the input terminal and the delay controller, the first circuit being configured to generate an output clock signal based at least on the first clock signal.
17. The apparatus of embodiment 16, further comprising a comparator coupled to the accumulator, the comparator being configured to generate the first signal by comparing a first in-rush current to the in-rush current threshold.
18. The apparatus of embodiment 17, wherein the accumulator is configured to decrease the first delay in response to the first signal indicating that the first in-rush current exceeds the in-rush current threshold.
19. The apparatus of embodiment 17, wherein the accumulator is configured to increase the first delay in response to the first signal indicating that the first in-rush current is below the in-rush current threshold.
20. The apparatus of embodiment 16, wherein the output clock signal is characterized by a first duty cycle, the first duty cycle is associated with the first delay.

## Claims

1. An apparatus comprising:
an input terminal configured to receive an input clock signal;
a delay controller coupled to the input terminal, the delay controller being configured to generate a first clock signal by providing a first delay to the input clock signal based on a first signal;
an accumulator coupled to the delay controller, the accumulator being configured to generate the first signal and adjust the first delay based on a second signal, the second signal being associated with an in-rush current threshold; and
a first circuit coupled to the input terminal and the delay controller, the first circuit being configured to generate an output clock signal based at least on the first clock signal.

2. The apparatus of claim 1, further comprising a comparator coupled to the accumulator, the comparator being configured to generate the second signal by comparing a first in-rush current to the in-rush current threshold.

3. The apparatus of claim 2, wherein the first in-rush current is measured by a current sensing circuit coupled to a power stage.

4. The apparatus of claim 2, wherein the accumulator is configured to decrease the first delay in response to the second signal indicating that the first in-rush current exceeds the in-rush current threshold.

5. The apparatus of claim 2, wherein the accumulator is configured to increase the first delay in response to the second signal indicating that the first in-rush current is below the in-rush current threshold.

6. An apparatus comprising:
an input terminal configured to receive an input clock signal;
a delay controller coupled to the input terminal, the delay controller being configured to generate a first clock signal by providing a first delay to the input clock signal based on a first signal;
an accumulator coupled to the delay controller, the accumulator being configured to generate the first signal and adjust the first delay based on a second signal;
a comparator coupled to the accumulator, the comparator being configured to generate the second signal by comparing a first in-rush current to an in-rush current threshold; and
a first circuit coupled to the delay controller, the first circuit being configured to generate an output clock signal based at least on the first clock signal.

7. The apparatus of one of the preceding claims,
wherein the first signal comprises an analog signal.

8. The apparatus of one of the claims 1 - 6, wherein the first signal comprises a digital signal.

9. The apparatus of one of the preceding claims, wherein the first circuit comprises a logic gate configured to generate the output clock signal based at least on the input clock signal and the first clock signal.

10. The apparatus of claim 9, wherein the logic gate comprises an XOR gate or an AND gate.

11. An apparatus comprising:
an input terminal configured to receive an input clock signal;
a delay controller coupled to the input terminal, the delay controller being configured to generate a first clock signal by providing a first delay to the input clock signal;
an accumulator coupled to the delay controller, the accumulator being configured to adjust the first delay based on a first signal, the first signal being associated with an in-rush current threshold; and
a first circuit coupled to the input terminal and the delay controller, the first circuit being configured to generate an output clock signal based at least on the first clock signal.

12. The apparatus of claim 11, further comprising a comparator coupled to the accumulator, the comparator being configured to generate the first signal by comparing a first in-rush current to the in-rush current threshold.

13. The apparatus of claim 12, wherein the accumulator is configured to decrease the first delay in response to the first signal indicating that the first in-rush current exceeds the in-rush current threshold.

14. The apparatus of claim 12, wherein the accumulator is configured to increase the first delay in response to the first signal indicating that the first in-rush current is below the in-rush current threshold.

15. The apparatus of one of the preceding claims, wherein the output clock signal is **characterized by** a first duty cycle, the first duty cycle is associated with the first delay.
